# EUROPÄISCHE PATENTSCHRIFT

(11) **EP 2 667 485 B1**
(45) Veröffentlichungstag und Bekanntmachung des Hinweises auf die Patenterteilung: **19.11.2014**
(21) Anmeldenummer: 12004079.5
(22) Anmeldetag: 25.05.2012
(51) Int. Cl.: H02K 1/30, H02K 7/08

(54) **Elektromotor und Lagerungsanordnung**
Electric motor and storage assembly
Moteur électrique et agencement de stockage

(43) Veröffentlichungstag der Anmeldung: 27.11.2013
(73) Patentinhaber: Compound Disk Drives GmbH, 82319 Starnberg (DE)
(72) Erfinder: Hein, Sören, 80538 München (DE); Böbel, Friedrich, 82547 Eurasburg (DE)
(74) Vertreter: Gellner, Bernd

(56) Entgegenhaltungen:
- WO-A1-2010/040535
- WO-A2-2008/014253

## Beschreibung

Die Erfindung betrifft eine elektrische Maschine sowie eine Lagerungsanordnung mit einem um eine Rotorwelle drehbar angeordneten Rotor, wobei der Rotor mit der Rotorwelle so verbunden ist, dass Drehbewegungen des Rotors auf die Rotorwelle übertragen werden, wobei der Rotor mittels mindestens einem radial von der Rotorwelle beabstandeten Außenlager gelagert ist.

Aus der DE 10 2006 036 707 83 ist ein elektrischer Antrieb mit einem speziell gestalteten Stator und einem scheibenförmigen, mit Permanentmagneten bestückten Rotor bekannt. Zur Erzielung einer möglichst hohen magnetischen Flussdichte sollte der Luftspalt zwischen dem Rotor und dem Stator möglichst klein gehalten werden. Dies erfordert jedoch eine präzise Lagerung des Rotors, damit dieser auch bei Stößen oder Erschütterungen frei und rund läuft.

In der DE 10 2008 050 832 A1 ist eine Lagerungsanordnung für einen Rotor beschrieben, welche wenigstens ein Rotorlager aufweist, das in einem radial von der Rotationsachse beabstandeten Bereich mit dem Rotor in Wirkverbindung steht. Diese Lagerungsanordnung soll sicherstellen, dass die Rotorwelle und der an ihr befestigte Rotor in der vorgesehenen Position gehalten werden.

Aus Drehmomentgründen werden Rotor und Stator häufig so ausgeführt, dass der Luftspalt zwischen dem Rotor und dem Stator einen großen radialen Abstand von der Rotorachse besitzt. Bei Rotoren mit einem Durchmesser von beispielsweise 30 bis 40 cm bewirken damit allerdings schon geringfügige Verkippungen der Rotorachse große Änderungen des Luftspalts. Bei sehr schmalen Luftspalten von nur wenigen Zehntelmillimeter zwischen Rotor und Stator werden daher an die Lagerung des Rotors sehr hohe Anforderungen gestellt, damit dieser auch bei Vibrationen der Rotorachse noch beruhrungsfrei läuft.

Aufgabe der vorliegenden Erfindung ist es daher, eine elektrische Maschine mit einer verbesserten Lagerung des Rotors und eine entsprechende Lagerungsanordnung zu entwickeln.

Diese Aufgabe wird durch eine elektrische Maschine mit einem um eine Rotorwelle drehbar angeordneten Rotor gelöst, wobei der Rotor mit der Rotorwelle so verbunden ist, dass Drehbewegungen des Rotors auf die Rotorwelle übertragen werden und wobei der Rotor mittels mindestens einem radial von der Rotorwelle beabstandeten Außenlager gelagert ist, und welcher dadurch gekennzeichnet ist, dass der Rotor so mit der Rotorwelle verbunden ist, dass eine axiale Relativbewegung zwischen dem Rotor und der Rotorwelle möglich ist.

Die erfindungsgemäße Lagerungsanordnung weist einen um eine Rotorwelle drehbar angeordneten Rotor auf, wobei der Rotor mit der Rotorwelle so verbunden ist, dass Drehbewegungen des Rotors auf die Rotorwelle übertragen werden und wobei der Rotor mittels mindestens einem radial von der Rotorwelle beabstandeten Außenlager gelagert ist, und welche dadurch gekennzeichnet ist, dass der Rotor so mit der Rotorwelle verbunden ist, dass eine axiale Relativbewegung zwischen dem Rotor und der Rotorwelle möglich ist.

Erfindungsgemäß werden der Rotor und die Rotorwelle soweit voneinander entkoppelt, dass sich kleine Lageänderungen der Rotorwelle, insbesondere aufgrund von Stößen oder Erschütterungen, und auch statische Fertigungstoleranzen nicht auf die Lage des Rotors auswirken. Rotor und Rotorwelle werden so miteinander verbunden, dass ein Drehmoment vom Rotor auf die Rotorwelle und umgekehrt übertragen wird, sich Rotor und Rotorwelle aber In axialer Richtung in gewissem Umfang gegeneinander bewegen können. Auf diese Weise wird der Rotor von Stößen auf die Rotorwelle oder Vibrationen entkoppelt: Der Luftspalt zwischen Rotor und Stator bleibt daher unbeeinflusst von solchen Stößen und der Rotor läuft auch bei Vibrationen frei und rund.

In einer bevorzugten Ausführungsform steht der Rotor mit der Rotorwelle über mindestens ein flexibles Verbindungselement in Wirkverbindung. Das flexible Verbindungselement ist so ausgeführt, dass es eine Bewegung des Rotors in der vorgesehenen Rotordrehrichtung auf die Rotorwelle überträgt und umgekehrt eine Drehung der Rotorwelle um ihre Längsachse auf den Rotor überträgt. Das flexible Verbindungselement ist also hinsichtlich der Übertragung dieser Drehbewegungen starr. Dagegen werden Relativbewegungen zwischen Rotor und Rotorwelle in axialer Richtung, d.h. in Richtung der Rotorwelle, und/oder in radialer Richtung, d.h. in einer Richtung senkrecht zur Rotorwelle, und/oder Winkeländerungen zwischen der Rotorwelle und der geometrischen Achse des Rotors durch das flexible Verbindungselement aufgenommen und nicht übertragen.

Als geometrische Achse des Rotors wird hierbei diejenige Achse bezeichnet, um die sich der Rotor gemäß dessen Auslegung drehen soll. Meist ist der Rotor drehsymmetrisch, d.h. nach einer Drehung um einen Winkel kleiner 360° ist der Rotor deckungsgleich mit dem Rotor vor der Drehung. In einem solchen Fall bildet die Drehachse oder Symmetrieachse des Rotors dessen geometrische Achse. Die geometrische Achse kann zum Beispiel die Senkrechte auf dem Rotormittelpunkt oder auf dem Rotorschwerpunkt sein. Ohne den Einfluss äußerer Störungen, wie zum Beispiel Vibrationen, fallen Rotorwelle und geometrische Achse des Rotors zusammen,

Vorzugsweise nimmt das flexible Verbindungselement sowohl axiale als auch radiale Relativbewegungen zwischen Rotor und Rotorwelle auf als auch Winkeländerungen zwischen Rotorwelle und Rotor bzw. dessen geometrischer Achse. Nur Drehbewegungen des Rotors bzw. der Rotorwelle werden auf das jeweils andere Element, die Rotorwelle bzw. den Rotor, übertragen. Die Erfindung bewirkt eine Entkopplung des Rotors und der Rotorwelle im Hinblick auf äußere Einflüsse. Der Rotor bleibt damit unbeeinflusst von Vibrationen und Schwingungen der Rotorwelle und von Stößen auf die Rotorwelle. Auch Verkippungen oder Verwindungen der Rotorwelle stören den Rundlauf des Rotors nicht.

Vorzugsweise ist der Rotor ringförmig ausgeführt. Unter dem Begriff ringförmige Ausführung des Rotors" wird eine Ausführung verstanden, gemäß der der Rotor nicht in direktem Kontakt mit der Rotorwelle steht, sondern indirekt über das flexible Verbindungselement mit dem Rotor verbunden ist. Der Innendurchmesser des Rotors ist größer als die hierfür vorgesehene Aufnahme an der Rotorwelle, so dass Raum für die Zwischenschaltung des flexiblen Verbindungselements verbleibt.

In einer bevorzugten Ausfahrungsform der Erfindung sind Rotor und flexibles Verbindungselement einstückig ausgeführt. Unter dem Begriff "einstückig" wird insbesondere eine Ausführung verstanden, gemäß der Rotor und flexibles Verbindungselement aus einem Werkstoff bestehen und ein Werkstück bilden. Rotor und flexibles Verbindungselement können aber auch aus verschiedenen Werkstoffen bestehen und fest miteinander verbunden, beispielsweise miteinander verklebt oder verachweißt, sein.

In einer anderen Ausführungsform ist das flexible Verbindungselement als separates Bauteil ausgeführt, welches zwischen Rotor und Rotorwelle montiert wird.

Das flexible Verbindungselement weist beispielsweise eine elastische Scheibe oder Membran auf. Die Ausdehnung der elastischen Scheibe oder Membran in der Scheibenebene wird wesenttich größer als deren Dicke gewählt. Die elastische Scheibe / Membran sorgt damit für die gewünschte Flexibilität und stellt die Entkopplung von Rotorwelle und Rotor in Bezug auf Schwingungen, Vibrationen und Stöße sicher. Unter dem Begriff Membran wird hierbei insbesondere eine Scheibe verstanden, deren maximale Ausdehnung in der Scheibenebene mindestens das Zehnfache, mindestens das 20-fache oder mindestens das 50-fache von deren Dicke beträgt. Die elastische Scheibe oder Membran kann als vollscheibe, mit Öffnungen oder Aussparungen oder In Segmentstruktur aufgebaut sein. Weiterhin ist es möglich, die Scheibe mit gebogenen oder gefalteten Strukturen zu versehen, welche sich bei axialen Bewegungen verformen und dadurch die geforderte Flexibilität in axialer Richtung sicherstellen. Vorzugsweise ist die Scheibe aus Kunststoff gefertigt. Der Vorteil einer solchen Membrankupplung mittels einer etastischeh Scheibe oder Membran ist deren Drehstarrheit, d.h. die direkte, spielfreie Übertragung des Drehmoments zwischen Rotor und Rotorwelle. Zum Beispiel kann eine Membranfeder oder Tellerfeder als flexibles Verbindungselement eingesetzt werden.

Die Verbindung von Rotor und Rotorwelle ist von Vorteil drehstarr ausgeführt. Hierfür eignen sich insbesondere die oben erwähnten Membrankupplungen, wobei Rotor und flexibles Verundungslement sowie flexibles Verbindungselement und Rotorwelle drehstarr miteinander verbunden sind, insbesondere untrennbar miteinander verbunden sind oder einstückig ausgeführt sind.

Eine drehstarre Verbindung von Rotor und Rotorwelle, welche in axialer Richtung Relativbewegungen ermöglicht, kann auch über eine formschlüssige Verbindung hergestellt werden. Solche formschlüssigen Verbindungen werden beispielsweise in Zahn- oder Klauenkupplungen eingesetzt. Hierbei weist mindestens eines der beiden Bauteile - Rotor und/oder Rotorwelle - Fortsätze oder Zähne auf, die in entsprechende Gegenstücke des anderen Bauteils eingreifen. So kann beispielsweise der Rotor ringförmig ausgeführt und mit einer Innenverzahnung an dessen innerem Umfang versehen sein. Die Rotorwelle weist eine entsprechende Außenverzahnung auf. Der Außendurchmesser der Rotorwelle bzw. des Teils der Rotorwelle, der die Außenverzahnung aufweist, wird so gewählt, dass die Innenverzahnung des Rotors und die Außenverzahnung der Rotorwelle ineinandergreifen, wenn der Rotor über die Rotorwelle geschoben ist. Die Verzahnung gewährleistet zum einen eine drehstarre Verbindung von Rotor und Rotorwelle, zum anderen besitzt sie einen Freiheitsgrad in axialer Richtung, d.h. Rotor und Rotorwelle können axial gegeneinander verschoben werden, um beispielsweise Vibrationen aufzunehmen.

Innen- und/oder Außenverzahnung können gerade oder ballig ausgeführt sein. Die ballige Ausführung von mindestens einer der beiden Verzahnungen, beispielsweise der Außenverzahnung, erlaubt neben den beschriebenen axialen Relativbewegungen von Rotor und Rotorwelle auch den Ausgleich von winkligem Versatz der Rotorwelle.

Bei elektrischen Maschinen, Elektromotoren oder Generatoren, mit großem Rotordurchmesser wirken sich Vibrationen der Rotorwelle besonders stark auf den Luftspalt zwischen Rotor und Stator aus. Die Erfindung eignet sich daher insbesondere für elektrische Maschinen mit scheibenförmigem Rotor, das heißt mit einem Rotor, dessen Ausdehnung parallel zur geometrischen Achse des Rotors, d.h. dessen axiale Ausdehnung, geringer ist als dessen Ausdehnung in radialer Richtung. Der Durchmesser des Rotors ist vorzugsweise mindestens dreimal, mindestens fünfmal oder mindestens zehnmal so groß wie dessen Dicke, d.h. wie dessen axiale Ausdehnung. Die Erfindung ist mit Vorteil bei elektrischen Maschinen mit einem Rotordurchmesser zwischen 12 cm und 240 cm, insbesondere zwischen 20 cm und 60 cm, und/oder bei Maschinen mit einem kleinen Luftspalt zwischen Rotor und Stator, insbesondere für Motoren, bei denen der Luftspalt weniger als 2 mm, weniger als 1 mm, weniger als 0,7 mm oder weniger als 0,5 mm beträgt.

Die Erfindung bezieht sich insbesondere auch auf Elektromotoren, deren Rotor aus einem Carbonwerkstoff, Kunststoffmaterial oder einem Verbundwerkstoff, insbesondere einem Faserverbundwerkstoff, gefertigt ist. Solche Motoren werden beispielsweise in der eingangs genannten DE 10 2006 036 707 B3 beschrieben.

In einer weiteren bevorzugten Ausführungsform ist der Rotor mit einer Vielzahl von Permanentmagneten versehen. Die Permanentmagnete können beispielsweise auf den Rotor aufgeklebt sein oder, bevorzugt, in entsprechende Aussparungen im Rotor eingebracht, eingeklebt oder einlaminiert sein.

Durch die erfindungsgemäße Kombination von Außenlager, ringförmigem Rotor und dem flexiblen Verbindungselement werden Rotor und Rotorwelle im Hinblick auf Vibrationen, Schwingungen oder Stöße voneinander entkoppelt. Damit wird der Rundlauf des Rotors auch bei äußeren Einwirkungen auf die Rotorwelle nicht gestört. Gleiches gilt für die Kombination aus Außenlager und formschlüssiger Verbindung zwischen Rotor und Rotorwelle, wobei Rotor und Rotorwelle axial gegeneinander verschiebbar sind.

Besonders vorteilhaft ist die Erfindung bei Axialflussmaschinen, bei denen die am Rotor angebrachten Magnete und der Stator axial beabstandet sind. Die Axialftussmaschine kann entweder Statoren auf beiden Seiten des Rotors oder auf nur einer Seite aufweisen. Insbesondere ist die Axialflussmaschine als Scheibenläufer ausgeführt. Bei einer Axialflussmaschine erstreckt sich der Luftspalt zwischen Rotor und Stator in axialer Richtung. Schon geringfügige Verkippungen der Rotorwelle können sich damit deutlich auf die Luftspaltbreite auswirken. Bei solchen Maschinen ist die Erfindung daher besonders vorteilhaft. Durch die Entkopplung von Rotorlagerung und Lagerung der Rotorwelle wird der freie Lauf des Rotors auch bei Stößen oder Vibrationen der Rotorwelle sichergestellt.

Von Vorteil ist zusätzlich mindestens ein Wellenlager zur Lagerung der Rotorwelle vorgesehen. Das oder die Wellenlager stützen und lagern die Rotorwelle und stellen sicher, dass die Rotorwelle auch im Betrieb in der vorbestimmten Position verbleibt. Das/die Wellenlager dienen insbesondere zur Aufnahme von radialen und/oder axialen Kräften auf die Rotorwelle, beispielsweise von Schwingungen und Vibrationen und Schlägen oder Stößen auf die Rotorwelle. Bei einer Ausführung mit flexiblem Verbindungselement können das oder die Wellenlager entweder in unmittelbarer Nähe des flexiblen Verbindungselements, welches den Rotor mit der Rotorwelle verbindet, oder deutlich davon beabstandet vorgesehen sein.

Gemäß einer weiteren Ausführungsform der Erfindung sind das Wellenlager und das Außenlager direkt mit dem Gehäuse der elektrischen Maschine verbunden.

Als Außenlager wird ein Lager bezeichnet, welches radial von der Rotorwelle beabstandet ist und zur Lagerung des Rotors vorgesehen ist. Erfindungsgemäß kann der Rotor mit einem oder mit mehreren Außenlagern gelagert sein.

Der Rotor des erfindungsgemäßen Elektromotors ist vorzugsweise mit einer Vielzahl von Permanentmagneten versehen, die sich in einem festen radialen Abstand vom Rotormittelpunkt, d.h. von der geometrischen Achse des Rotors, befinden. Das oder die Außenlager können in radialer Richtung weniger weit, weiter oder genauso weit wie die Permanentmagnete vom Rotormittelpunkt entfernt sein. Entsprechend kann sich das Außenlager oder können sich die Außenlager in radialer Richtung näher an der Rotorwelle, entfernter von der Rotorwelle oder genauso weit entfernt von der Rotorwelle befinden wie der Stator. Vorzugsweise sind das oder die Außenlager näher an den Permanentmagneten als an der Rotorwelle angeordnet.

Das Außenlager kann als Gleit- oder Wälzlager ausgeführt sein. Von Vorteil weist das Außenlager drehbar gelagerte Körper auf, ist also als Wälz-, Kugel- oder Rollenlager ausgebildet. Die drehbar gelagerten Körper bestehen vorzugsweise aus einem nicht magnetischen und/oder nicht-metallischen Material, beispielsweise werden Körper aus Keramik vorgesehen, insbesondere Keramikkugeln. Die drehbar gelagerten Körper können in dem den Stator tragenden Motorteil oder im Rotor drehbar angeordnet sein. Vorzugsweise sind die drehbar gelagerten Körper in dem den Stator aufweisenden Bauteil, beispielsweise einem Motorgehäuseteil, gelagert. Der Rotor ist in diesem Fall beispielsweise so angeordnet, dass er die drehbar gelagerten Körpern berührt. Bei einer Drehung des Rotors rollen die drehbar gelagerten Körper auf dem Rotor ab und hatten diesen in Bezug auf den Stator so in Position, dass der Luftspalt zwischen Rotor und Stator konstant bleibt. In einer anderen Ausführungsform sind die drehbar gelagerten Körper zusätzlich noch gedämpft oder mit einem dazwischengeschalteten Federelement gelagert.

Die Kontaktfläche zwischen einem drehbar gelagerten Körper und dem Rotor wird vorzugsweise punktförmig gewählt, um Scherkräfte auf die drehbar gelagerten Körper aufgrund unterschiedlicher Umfangsgeschwindigkeiten zu vermeiden. Die drehbar gelagerten Körper werden in dem Bereich, in dem sie mit dem Rotor in Kontakt stehen, vorzugsweise ballig ausgeführt oder die entsprechende Gegenfläche auf dem Rotor weist in radialer Richtung eine minimale Ausdehnung auf. Letzteres kann beispielsweise dadurch realisiert werden, dass der Rotor mit einer im Wesentlichen eindimensionalen Lauffläche für die drehbar gelagerten Körper versehen wird. Zum Beispiel kann ein entsprechend kreisförmig geformter Draht als Lauffläche auf dem Rotor aufgebracht werden.

Bei der oben beschriebenen Ausführungsform des Außenlagers mit drehbar gelagerten Körpern ist es von Vorteil, wenn der Rotor mit einer Lauffläche aus gehärtetem Metall, Keramik oder Glas versehen ist. Eine solche Lauffläche bietet für die drehbar gelagerten Körper eine feste, gleichmäßige Abrollfläche, die auch nach längerem Betrieb des Motors ihre ursprünglichen Abrolleigenschaften beibehält und damit sicherstellt, dass der Rotor bei gleichbleibendem Luftspalt rotieren kann.

Die Erfindung sowie weitere Details der Erfindung werden im Folgenden anhand der schematischen Zeichnungen näher erläutert. Hierbei zeigen:
- Figur 1: die Lageranordnung eines erfindungsgemäßen Elektromotors,
- Figur 2: eine Variante des Stators und des Außenlagers,
- Figur 3: die zu Figur 2 entsprechende Ausführung des Rotors,
- Figur 4: eine andere bevorzugte Ausführungsform des Rotors,
- Figur 5: die Draufsicht auf den Rotor gemäß Figur 4,
- Figur 6: eine bevorzugte Ausführungsform eines Außentagers und
- Figur 7: eine Detailansicht von Figur 6.

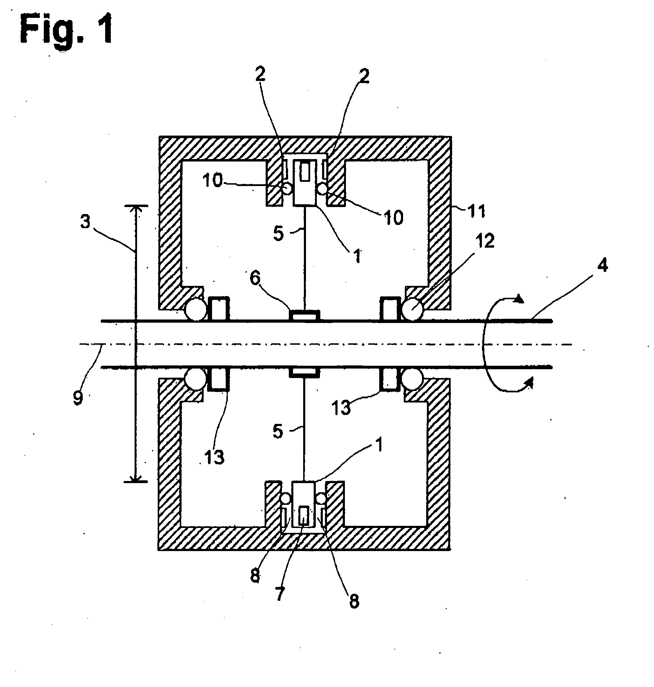

In Figur 1 ist schematisch ein erfindungsgemäßer Elektromotor gezeigt. Der Elektromotor besitzt einen ringförmigen Rotor 1 und einen Stator 2, der beidseitig des Rotors 1 angeordnete Statorzähne 2 umfasst. Unter dem Begriff Statorzähne sollen alle Arten von den magnetischen Fluss leitenden Vorsprüngen, Nuten, Ein- oder Ausbuchtungen des Stators verstanden werden. Die Statorzähne sind im Wesentlichen auf einem Kreis angeordnet, der sich senkrecht zur Zeichenebene der Figur 1 erstreckt. Die Statorwicklung ist der Übersichtlichkeit halber in den Figuren nicht gezeigt.

Der Rotor 1 ist als ringförmige Scheibe mit einem Außendurchmesser von beispielsweise 30 cm bis 40 cm ausgeführt. Der Innendurchmesser des Rotors 1 beträgt vorzugsweise zwischen und 10 cm und 30 cm. Der Rotor 1 besteht im Wesentlichen aus einem Fäserverbundwerkstoff, insbesondere einem Carbonwerkstoff, in oder an dem Permanentmagnete 7 befestigt sind. In der in Figur 1 gezeigten Variante besitzt der Rotor 1 Aussparungen, in die Permanentmagnete 7 einlaminiert sind. Der Rotor 1 umfasst beispielsweise zwischen 80 und 150 Permanentmagnete 7, welche gleichmäßig über den Rotor 1 verteilt angeordnet sind.

Zwischen dem Rotor 1 und den beidseitig des Rotors 1 angeordneten Statorzähnen 2 befindet sich jeweils ein schmaler Luftspalt 8 mit einer Breite von zum Beispiel 0,5 mm.

Aufgrund der relativ großen radialen Ausdehnung des Rotors 1 (in diesem Beispiel 15 cm bis 20 cm Radius) und dem sehr schmalen Luftspalt 8 bewirken leichte Verkippungen der geometrischen Achse des Rotors 1 große relative und absolute Änderungen des Luftspalts 8. Der Rotor 1 ist vorzugsweise drehsymmetrisch ausgeführt. Die Dreh- oder Symmetrieachse des Rotors 1 bildet damit dessen geometrische Achse.

Der Rotor 1 ist mit einer Rotorwelle 4 so verbunden, dass eine Drehbewegung des Rotors 1 zu einer Drehbewegung der Rotorwelle 4 führt und umgekehrt. Wäre der Rotor 1 starr mit der Rotorwelle 4 verbunden, so würden die geometrische Achse des Rotors 1 und die Rotorwelle 4 zusammenfallen. Verkippungen. Vibrationen oder Erschütterungen der Rotorwelle 4 wären damit gleichbedeutend mit entsprechenden Lageänderungen der geometrischen Achse des Rotors 1 und würden unerwünschte Änderungen der Luftspaltbreite hervorrufen oder sogar zu einem Schleifen des Rotors führen.

Erfindungsgemäß ist daher der Innendurchmesser 3 des Rotors 1 größer als der Außendurchmesser der Rotorwelle 4 ausgeführt. Die Verbindung des Rotors 1 mit der Rotorwelle 4 erfolgt über eine flexible Rotormembran 5 aus Kunststoff. Die Rotormembran 5 ist am inneren Durchmesser des ringförmigen Rotors 1 und über ein Befestigungselement 6 an der Rotorwelle 4 befestigt. Die Rotormembran 5 ist in axialer Richtung, d.h, in Richtung der Rotationsachse 9 der Rotorwelle 4 flexibel. Axiale Stöße auf die Rotoriwelle 4, d.h. Stöße in Richtung der Rotationsachse 9, führen zu einer Verformung der Rotormembran 5 und werden damit von der Rotormembran 5 aufgenommen, ohne dass sich die Stöße auf die Lage des Rotors 1 auswirken. Entsprechendes gilt für Verkippungen der Rotorwelle 4.

Die Rotormembran 5 überträgt dagegen Drehbewegungen des Rotors 1 im Wesentlichen direkt auf die Rotorwelle 4 und entsprechend Drehbewegungen der Rotorwelle 4 direkt auf den Rotor 1. Die Übetragung des Drehmoments erfolgt unmittelbar und spielfrei.

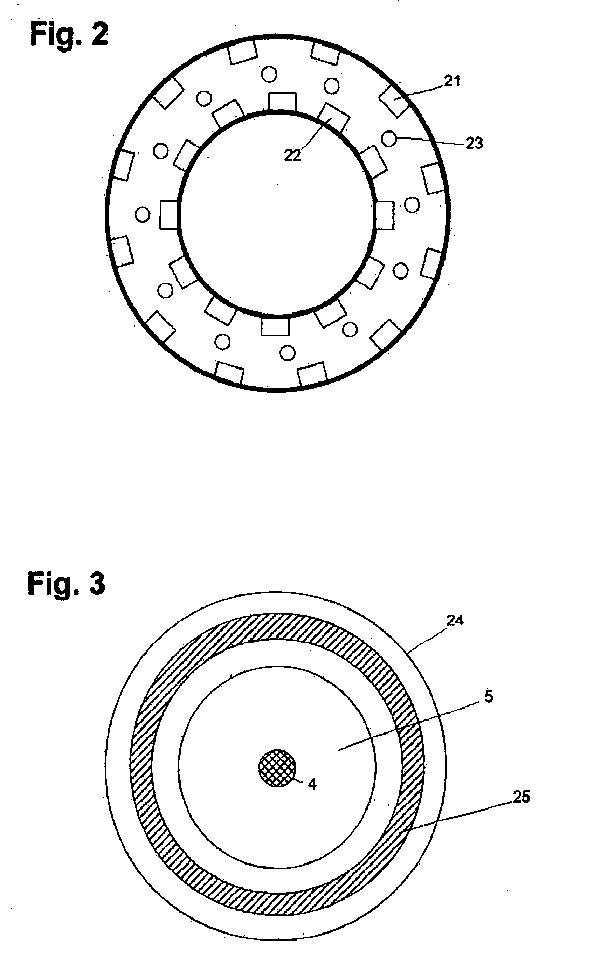

Zur Lagerung des Rotors 1 ist ein Außenlager vorgesehen. In dem in Figur 1 gezeigten Beispiel ist das Außenlager am Gehäuse 11 des Motors angebracht. Das Außenlager besitzt Führungen 10, welche den Rotor 1 so führen, dass der Luftspalt 8 zwischen den Statorzähnen 2 und dem Rotor 1 stets gleich breit bleibt. Die Führungen 10 können, wie in Figur 1 dargestellt, einen geringeren radialen Abstand zur Rotorwelle 4 besitzen als die Statorzähne 2 und die Permanentmagneten 7. Es ist aber auch möglich, die Führungen 10 radial außerhalb der Statorzähne 2 bzw. der Permanentmagneten 7 vorzusehen, d.h. weiter von der Rotorwelle 4 entfernt als die Statorzähne 2 bzw. die Permanentmagneten 7. In den Figuren 2 und 3 ist zudem eine Ausführungsform gezeigt, bei der die Führungen 10 denselben Abstand von der Rotorwelle 4 aufweisen wie die Permanentmagneten 7.

Die Führungen 10 sind so ausgeführt, dass der Rotor 1 in axialer Richtung in seiner relativen Position zum Stator 2 gehalten wird. In einer bevorzugten Ausführungsform sind die Führungen 10 als Kugellager ausgeführt. Im oder am Gehäuse 11 sind hierbei drehbar gelagerte Kugeln 10 so vorgesehen, dass die Kugeln 10 mit der Oberseite des Rotors 1 und mit der Unterseite des Rotors 1 in Kontakt stehen. Als Ober- und Unterseite werden hierbei die beiden den Rotor 1 in axialer Richtung begrenzenden Flächen bezeichnet. Sowohl an der Oberseite als auch an der Unterseite des Rotors 1 sind jeweils mindestens drei drehbar gelagerte Kugeln 10 vorgesehen.

Anstelle oder zusätzlich zu den beschriebenen Kugellagern können die Führungen 10 auch als Rollen- oder Gleitlager ausgeführt sein. Wesentlich ist, dass der Rotor 1 mit möglichst geringer Reibung in oder zwischen den Führungen 10 rotieren kann und dass der Rotor 1 in axialer Richtung relativ zum Stator 2 fest positioniert ist. Es Ist auch möglich, zusätzliche Lager vorzusehen, welche den Rotor 1 in radialer Richtung halten, d.h. welche Positionsänderungen des Rotors 1 in radialer Richtung, wiederum relativ zum Stator 2, verhindern. Bei einem Axialflussscheibentäufermotor ist der Rotor allerdings in der Regel selbstzentrierend, so dass die genannten zusätzlichen Lager nicht unbedingt notwendig sind.

Desweiteren sind Wellenlager 12 vorgesehen, um die Rotorwelle 4 zu lagern. Die Wellenlager 12 sind vorzugsweise als Kugel- oder Wätzlager ausgeführt und sollen die Rotorwelle 4 in der gewünschten Position halten. Zudem ist es günstig, an der Rotorwelle 4 Flansche 13 vorzusehen, die zusammen mit den Wellenlagem 12 Schutz vor Axialstößen bieten. Die beiden Flansche 13 sind so zwischen den beiden Wellenlagem 12 angeordnet, dass die Rotorwelle 4 in axialer Richtung relativ zum Gehäuse 11 fest positioniert ist.

Die Erfindung entkoppelt die Lagerung der Rotorwelle 4 von der Lagerung des Rotors 1. Auf diese Weise wird bei einem mechanischen Schock oder Schlag auf die Rotorwelle ein Anstreifen des Rotors 4 am Stator 2 verhindert

In Figur 2 ist eine bevorzugte Anordnung der Statorzähne dargestellt. Die Statorzähne 21, 22 sind in zwei konzentrischen Kreisen so angeordnet, dass sie in dem Elektromotor dem Rotorring gegenüberliegen. Es sind ein äußerer Kreis von Statorzähnen 21 und ein innerer Kreis von Statorzähnen 22 vorgesehen, wobei die inneren und die äußeren Statorzähne versetzt zueinander angeordnet sind.

Zwischen den beiden Kreisen von Statorzähnen 21, 22 sind mehrere Keramikkugeln 23 drehbar gelagert angeordnet. Die Keramikkugeln 23 dienen dazu den Rotor 24 in einem festen Abstand zum Stator 21, 22 zu halten. Es hat sich weiterhin als günstig erwiesen, die Keramikkugeln gedämpft zu lagern.

In Figur 3 ist der Rotor 24 schematisch dargestellt. Der Rotor 24 ist als ringförmige Scheibe ausgeführt und wie anhand von Figur 1 erläutert über eine Rotormembran 5 oder ein anderweitiges geeignetes flexibles Verbindungselement mit der Rotorwelle 4 verbunden.

Der Rotor 24 weist eine Vielzahl von Vertiefungen zur Aufnahme von Permanentmagneten auf, die gleichrnäßig mit festem Winkelabstand zueinander angeordnet sind. Die Permanentmagnete sind in den aus einem Faserverbundmaterial bestehenden Rotor 24 einlaminiert. Der Übersichtlichkeit halber sind die Vertiefungen mit den Magneten in Figur 3 nicht dargestellt.

Auf der Oberseite des Rotors 24 ist ein gehärteter Metallstreifen 25 aufgebracht. Der Metallstreifen 25 deckt die darunterliegenden, einlaminierten Permanentmagnete ab. Der Metallstreifen 25 dreht sich mit dem rotierenden Magentfeld mit und ist somit immer demselben Magnetfeld ausgesetzt. Das heißt, der Metallstreifen "sieht" ein konstantes, sich nicht änderndes Magnetfeld.

Der Rotor 24 ist so angeordnet, dass die Keramikkugeln 23 den Metallstreifen 25 berühren. Bei einer Drehung des Rotors 24 rollen die Keramikkugeln 23 auf dem Metallstreifen 25 ab und halten Rotor 24 und Stator 21, 22 in einem festen Abstand zueinander.

Anstehe des gehärteten Metallstreifens ist es prinzipiell auch möglich, die Keramikkugeln oder andere geeignete drehbar gelagerte Körper direkt auf dem Rotormaterial abrollen zu lassen. Von Vorteil wird jedoch auf dem Rotor ein hartes und beständiges Material als Rollfläche für die drehbar gelagerten Körper aufgebracht. Dies beispielsweise auch durch Aufdampfen einer Metall-, Keramik- oder anderweitigen harten Schicht erfolgen.

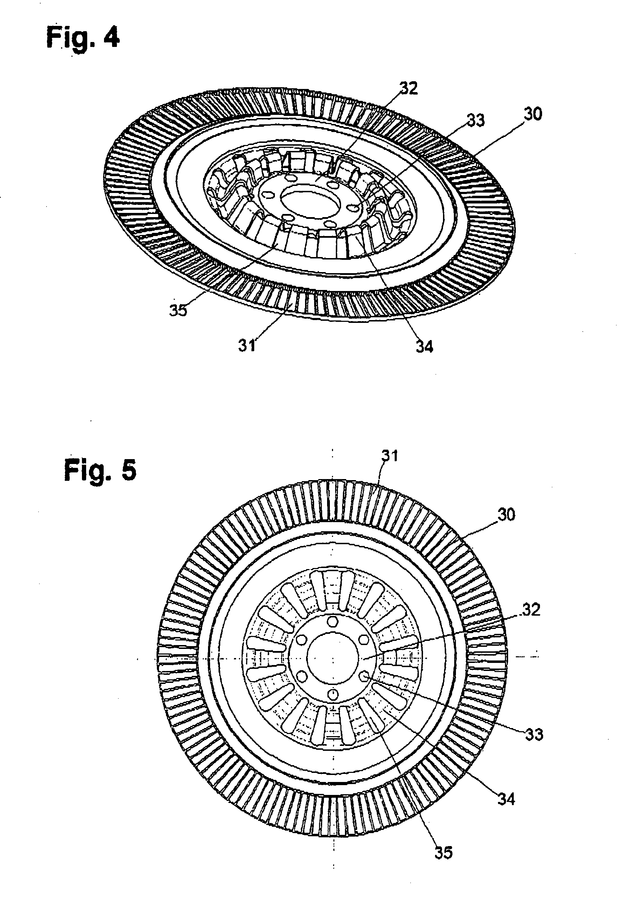

In den Figuren 4 und 5 ist eine weitere Variante eines erfindungsgemäßen Rotors dargestellt. Der Rotor und das flexible Verbindungselement sind in diesem Fall einstückig ausgeführt und aus Kunststoff gefertigt. Der Rotor weist einen Außenring 30 auf, der mit einer Vielzahl von Vertiefungen 31 versehen ist, in die die Permanentmagnete eingebracht werden können. An seinem inneren Umfang besitzt der Rotor einen Befestigungsring 32, welche Bohrungen 33 aufweist. Der Rotor kann mittels des Befestigungsrings 32 an einem entsprechenden Flansch an der Rotorwelle angeschraubt werden.

Zwischen dem inneren Befestigungsring 32 und dem Außenring 30 ist ein flexibler Verbindungsbereich vorgesehen. Der flexible Verbindungsbereich umfasst mehrere in radialer Richtung speichenförmig angeordnete Lamellen 34, welche Z-förmig gebogen oder gefaltet sind. Die Lamellen 34 können ein, zwei oder auch mehr Biegungen, Knicke oder Faltungen aufweisen, die sich bei einer axialen Verschiebung des Befestigungsrings 32 gegenüber dem Außenring 30 verformen. In Umfangsrichtung sind die Lamellen 34 jedoch starr, so dass ein Drehmoment vom Außenring 30 auf den Befestigungsring 32 verlustfrei übertragen wird. Der gesamte Rotor ist drehstarr ausgeführt. Zwischen den einzelnen Lamellen 34 befinden sich Öffnungen 35.

Der in den Figuren 4 und 5 gezeigte Rotor beinhaltet damit zugleich die Funktion des flexiblen Verbindungselements.

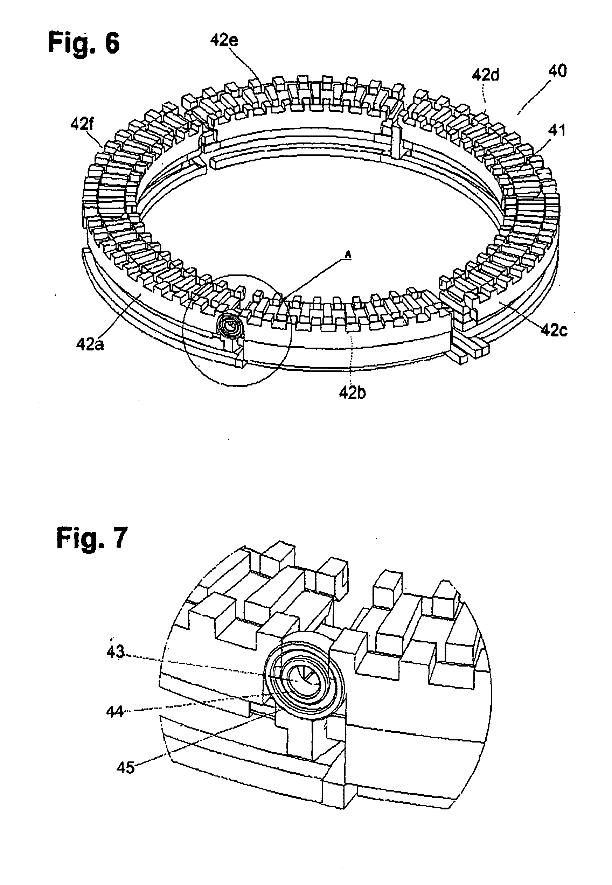

Figur 6 zeigt eine Ausführungsform des erfindungsgemäßen Außenlagers. Mit dem Bezugszeichen 41 sind die Statomuten bezeichnet. Der Rotor ist der Übersichtlichkeit halber nicht dargestellt. Die Statomuten 41 sind kreisförmig in mehreren Sektoren 42a, 42b, 42c, 42d, 42e, 42f angeordnet. Zwischen zwei solcher Sektoren 42a, 42b ist ein Miniaturwälzlager 43 vorgesehen. Das Miniaturwälzlager 43 weist einen Innenring 44 und einen Außenring 45 auf, zwischen denen rollende Körper, beispielsweise Rollen oder Kugeln, angeordnet sind. Der Innenring 44 ist fest mit dem Stator und/oder dem nicht dargestellten Motorgehäuse verbunden. Die Drehachse des Miniaturwälzlagers wird radial ausgerichtet. Der Außenring 45 ist in tangentialer Richtung frei beweglich.

Der Rotor liegt in der Darstellung nach den Figuren 6 und 7 auf den Außenringen 45 der Miniaturwälzlager 43 auf. Der Rotor dreht sich nahezu reibungsfrei auf den rotierbaren Außenringen 45 der Miniaturwälzlager 43.

Vorzugsweise sind drei Miniaturwälzlager 43 vorgesehen, welche besonders bevorzugt gleichmäßig über den Umfang des Stators verteilt angeordnet sind. Die Außenringe 45 der Miniaturwälzlager 43 ragen beispielsweise 0,5 mm über die durch die Oberseite des Stators definierte Ebene hinaus und gewährleisten so einen festen Luftspalt zwischen Stator und Rotor.

Auf der anderen Seite des Rotors ist eine entsprechende Außenlagerung mit drei oder mehr Miniaturwälzlagem vorgesehen.

## Patentansprüche

1. Elektrische Maschine, insbesondere Elektromotor, mit einem um eine Rotorwelle (4) drehbar angeordneten Rotor (1), wobei der Rotor (1) mit der Rotorwelle (4) so verbunden ist, dass, Drehbewegungen ,des Rotors (1) auf die Rotorwelle (4) übertragen werden, wobei der Rotor (1) mittels mindestens einem radial von der Rotorwelle (4) beabstandeten Außenlager gelagert ist,
**dadurch gekennzeichnet, dass** der Rotor (1) so mit der Rotorwelle (4) verbunden ist, dass eine axiale Relativbewegung zwischen Rotor (1) und Rotorwelle, (4) möglich ist.

2. Elektrische Maschine nach Anspruch 1, **dadurch gekennzeichnet, dass** der Rotor (1) ringförmig ausgeführt ist und über mindestens ein flexibles Verbindungselement (5) mit der Rotorwelle (4) verbunden ist, wobei das flexible Verbindungselement (5) axiale und/oder radiale Relativbewegungen und/oder Winkelbewegungen zwischen der geometrischen Achse des Rotors (1) und der Rotorwelle (4) erlaubt.

3. Elektrische Maschine nach Anspruch 2, **dadurch gekennzeichnet, dass** der Rotor (1) und das flexible Verbindungselement (5) einstückig ausgeführt sind.

4. Elektrische Maschine nach einem der vorhergehenden Ansprüche, **dadurch gekennzeichnet, dass** das flexible Verbindungselement (5) eine elastische Scheibe, insbesondere eine Membran- oder Tellerfeder, aufweist.

5. Elektrische Maschine nach einem der vorhergehenden Ansprüche, **dadurch gekennzeichnet, dass** der Rotor (1) und die Rotorwelle (4) formachlüssig miteinander verbunden sind.

6. Elektrische Maschine nach einem der vorhergehenden Ansprüche, **dadurch gekennzeichnet, dass** der Rotor (1) eine Innenverzahnung und die Rotorwelle (4) eine Außenverzahnung aufweisen.

7. Elektrische Maschine nach einem der vorhergehenden Ansprüche, **dadurch gekennzeichnet, dass** der Rotor (1) scheibenförmig ausgebildet ist.

8. Elektrische Maschine nach einem der vorhergehenden Ansprüche, **dadurch gekennzeichnet, dass** der Rotor (1) aus einem Kunststoffmaterial oder einem Verbundwerkstoff, insbesondere einem Faserverbundwerkstoff, gefertigt ist.

9. Elektrische Maschine nach einem der vorhergehenden Ansprüche, **dadurch gekennzeichnet, dass** die elektrische Maschine als Axialflussmaschine ausgeführt ist.

10. Elektrische Maschine nach einem der vorhergehenden Ansprüche, **dadurch gekennzeichnet, dass** der Rotor (1) mit einer Vielzahl von Permanentmagneten (7) versehen ist.

11. Elektrische Maschine nach einem der vorhergehenden Ansprüche, **dadurch gekennzeichnet, dass** mindestens ein Wellenlager (13) zur Lagerung der Rotorwelle (4) vorgesehen ist.

12. Elektrische Maschine nach einem der vorhergehenden Ansprüche, **dadurch gekennzeichnet, dass** das Außenlager drehbar gelagerte Körper (10) aufweist, insbesondere dass das Außenlager als Wälz- oder Kugellager ausgebildet ist.

13. Elektrische Maschine nach Anspruch 12, **dadurch gekennzeichnet, dass** die drehbar gelagerten Körper (10) gedämpft gelagert sind.

14. Elektrische Maschine nach einem der Ansprüche 12 oder 13, **dadurch gekennzeichnet, dass** der Rotor (1, 24) mit einer Lauffläche (25) aus gehärtetem Metall, Keramik oder Glas versehen ist, mit der die drehbar gelagerten Körper (10, 23) in Kontakt stehen.

## Claims

1. Electrical machine, in particular electric motor, comprising a rotor (1) which is arranged such that it can rotate about a rotor shaft (4), wherein the rotor (1) is connected to the rotor shaft (4) such that rotary movements of the rotor (1) are transmitted to the rotor shaft (4), wherein the rotor (1) is mounted by means of at least one external bearing which is at a radial distance from the rotor shaft (4), **characterized in that** the rotor (1) is connected to the rotor shaft (4) such that an axial relative movement between the rotor (1) and the rotor shaft (4) is possible.

2. Electrical machine according to Claim 1, **characterized in that** the rotor (1) is of annular design and is connected to the rotor shaft (4) by means of at least one flexible connecting element (5), wherein the flexible connecting element (5) permits axial and/or radial relative movements and/or angular movements between the geometric axis of the rotor (1) and the rotor shaft (4).

3. Electrical machine according to Claim 2, **characterized in that** the rotor (1) and the flexible connecting element (5) are of integral design.

4. Electrical machine according to one of the preceding claims, **characterized in that** the flexible connecting element (5) has an elastic disc, in particular a diaphragm or plate spring.

5. Electrical machine according to one of the preceding claims, **characterized in that** the rotor (1) and the rotor shaft (4) are connected to one another in an interlocking manner.

6. Electrical machine according to one of the preceding claims, **characterized in that** the rotor (1) has an internal tooth system, and the rotor shaft (4) has an external tooth system.

7. Electrical machine according to one of the preceding claims, **characterized in that** the rotor (1) is in the form of a disc.

8. Electrical machine according to one of the preceding claims, **characterized in that** the rotor (1) is produced from a plastic material or a composite material, in particular a fibre composite material.

9. Electrical machine according to one of the preceding claims, **characterized in that** the electrical machine is designed as an axial flux machine.

10. Electrical machine according to one of the preceding claims, **characterized in that** the rotor (1) is provided with a large number of permanent magnets (7).

11. Electrical machine according to one of the preceding claims, **characterized in that** at least one shaft bearing (13) for mounting the rotor shaft (4) is provided.

12. Electrical machine according to one of the preceding claims, **characterized in that** the external bearing has rotatably mounted bodies (10), in particular **in that** the external bearing is in the form of a roller bearing or ball bearing.

13. Electrical machine according to Claim 12, **characterized in that** the rotatably mounted bodies (10) are mounted in a damped manner.

14. Electrical machine according to either of Claims 12 and 13, **characterized in that** the rotor (1, 24) is provided with a running surface (25) which is composed of hardened metal, ceramic or glass, and the rotatably mounted bodies (10, 23) are in contact with the said running surface.

## Revendications

1. Machine électrique, en particulier moteur électrique, comprenant un rotor (1) disposé de manière à pouvoir tourner autour d'un arbre de rotor (4), le rotor (1) étant connecté à l'arbre de rotor (4) de telle sorte que des mouvements de rotation du rotor (1) soient transmis à l'arbre de rotor (4), le rotor (1) étant supporté au moyen d'au moins un palier extérieur espacé radialement de l'arbre de rotor (4),
**caractérisée en ce que** le rotor (1) est connecté à l'arbre de rotor (4) de telle sorte qu'un mouvement relatif axial entre le rotor (1) et l'arbre de rotor (4) soit possible.

2. Machine électrique selon la revendication 1, **caractérisée en ce que** le rotor (1) est réalisé sous forme annulaire et est connecté par le biais d'au moins un élément de connexion flexible (5) à l'arbre de rotor (4), l'élément de connexion flexible (5) permettant des mouvements relatifs axiaux et/ou radiaux et/ou des mouvements angulaires entre l'axe géométrique du rotor (1) et l'arbre de rotor (4).

3. Machine électrique selon la revendication 2, **caractérisée en ce que** le rotor (1) et l'élément de connexion flexible (5) sont réalisés d'une seule pièce.

4. Machine électrique selon l'une quelconque des revendications précédentes, **caractérisée en ce que** l'élément de connexion flexible (5) présente une rondelle élastique, en particulier un ressort à membrane ou un ressort Belleville.

5. Machine électrique selon l'une quelconque des revendications précédentes, **caractérisée en ce que** le rotor (1) et l'arbre de rotor (4) sont connectés l'un à l'autre par engagement par correspondance de forme.

6. Machine électrique selon l'une quelconque des revendications précédentes, **caractérisée en ce que** le rotor (1) présente une denture intérieure et l'arbre de rotor (4) présente une denture extérieure.

7. Machine électrique selon l'une quelconque des revendications précédentes, **caractérisée en ce que** le rotor (1) est réalisé sous forme de disque.

8. Machine électrique selon l'une quelconque des revendications précédentes, **caractérisée en ce que** le rotor (1) est fabriqué en un matériau en plastique ou en un matériau composite, en particulier en un matériau composite renforcé par des fibres.

9. Machine électrique selon l'une quelconque des revendications précédentes, **caractérisée en ce que** la machine électrique est réalisée sous forme de machine à flux axial.

10. Machine électrique selon l'une quelconque des revendications précédentes, **caractérisée en ce que** le rotor (1) est pourvu d'une pluralité d'aimants permanents (7).

11. Machine électrique selon l'une quelconque des revendications précédentes, **caractérisée en ce qu'**au moins un palier d'arbre (13) est prévu pour supporter sur palier l'arbre de rotor (4).

12. Machine électrique selon l'une quelconque des revendications précédentes, **caractérisée en ce que** le palier extérieur présente des corps montés à rotation (10), en particulier **en ce que** le palier extérieur est réalisé sous forme de palier à roulement ou de roulement à billes.

13. Machine électrique selon la revendication 12, **caractérisée en ce que** les corps montés à rotation (10) sont supportés de manière amortie.

14. Machine électrique selon l'une quelconque des revendications 12 ou 13, **caractérisée en ce que** le rotor (1, 24) est pourvu d'une surface de roulement (25) en métal trempé, en céramique ou en verre, avec laquelle les corps montés à rotation (10, 23) sont en contact.
